# EUROPÄISCHE PATENTSCHRIFT

(11) **EP 0 954 989 B1**
(45) Veröffentlichungstag und Bekanntmachung des Hinweises auf die Patenterteilung: **27.11.2002**
(21) Anmeldenummer: 99108981.4
(22) Anmeldetag: 06.05.1999
(51) Int. Cl.: A23N 17/00

(54) **Anlage zur Futtermittelherstellung**
Plant for producing fodder
Installation pour la préparation d'aliments

(30) Priorität: 08.05.1998 DE 29808392 U
(43) Veröffentlichungstag der Anmeldung: 10.11.1999
(73) Patentinhaber: Amandus Kahl GmbH & Co., 21465 Reinbek (DE)
(72) Erfinder: Krausler, Laszlo Dipl.-Ing., D-21465 Reinbek (DE)
(74) Vertreter: Glawe, Delfs, Moll & Partner

(56) Entgegenhaltungen:
- EP-A- 0 331 207
- EP-A- 0 522 220
- US-A- 4 721 448

## Beschreibung

Die Erfindung betrifft eine Anlage zur Futtermittelherstellung mit einer Dosiereinrichtung, mit einem Durchlaufmischer, mit einem Expander, in dem das Material durch mechanische Bearbeitung auf hohen Druck und hohe Temperatur gebracht und anschließend entspannt wird, mit einer Pelletpresse und mit einem sich daran anschließenden Kühler.

Bei einer solchen Anlage wird mit einer Dosiereinrichtung der Durchsatz durch die Anlage bestimmt. In einem sich daran anschließenden Durchlaufmischer wird das Material noch einmal gründlich gemischt, wobei dann auch flüssige oder gasförmige Zusätze (Wasser, Melasse, Fett, Dampf usw.) zugegeben werden können. Anschließend gelangt das Material in einen Expander, wo es durch ein Förderelement gegen ein den Ausgang wenigstens teilweise verschließendes Gegendruckelement gedrückt wird. Dabei erhöht sich die Temperatur durch die mechanische Bearbeitung. In Folge des mechanischen Arbeitsdrucks, der ausgeübt wird, erzielt das Material dabei auch eine über 100° C liegende Temperatur, ohne daß das darin enthaltene Wasser verdampft. Anschließend wird das Material dann entspannt und in einer Pelletpresse zu Pellets verarbeitet (EP-B-0 331 207). Das im Expander und auch in der Pelletpresse durch die mechanische Bearbeitung stark erwärmte Futtermittel wird dann in einem nachgeschalteten Kühler abgekühlt.

Eine Anlage gemäß dem Oberbegriff des Anspruches 1 ist z.B. aus der US-4721998-A bekannt.

Bei dem Verfahren tritt beträchtliche Wärme auf, und zwar aufgrund der Beaufschlagung mit Dampf und der mechanischen Bearbeitung im Expander und in der Pelletpresse. Das ursprünglich beigegebene Wasser oder Wasserdampf verdampft insbesondere am Ausgang des Expanders, wenn das Material schlagartig auf Atmosphärendruck entspannt wird. Auch im Bereich der Pelletpresse tritt aber eine beträchtliche Verdampfung auf. Der Wasserdampf geht dabei normalerweise verloren.

Das Material, aus dem die Futtermittel hergestellt werden sollen, hat meistens bei den beträchtlichen auftretenden Temperaturen einen sehr unangenehmen Geruch, so daß das weitere Problem besteht, daß große Mengen von Abluft gereinigt werden müssen.

Die Aufgabe der Erfindung besteht demgegenüber darin, eine Anlage der Eingangs genannten Art zu schaffen, die ökologisch wesentlich vorteilhafter ist und, bei der Energie und Wasser eingespart werden und die Geruchsbelästigung vermindert werden kann.

Die erfindungsgemäße Lösung besteht darin, daß dem Expander ein Prozessorbehälter vorgeschaltet ist, in dem von oben Material eingefüllt und unten abgezogen wird, wobei am Boden des Behälters durch Bohrungen ein Gas austritt, das das Material von unten nach oben durchströmt, und daß als Gas Brüden verwendet werden, die dem Expander, der Pelletpresse und/oder dem Kühler entnommen werden.

Es wird also ein zusätzlicher Prozessorbehälter vorgesehen, der an sich bekannt ist, indem von oben Material eingefüllt und unten wieder abgezogen wird. Durch entsprechende Füllstandsmelder wird dabei vorteilhafterweise der Pegel des Materials im Prozessorbehälter ungefähr konstant gehalten. Von unten wird durch Öffnungen ein Gas eingeblasen. Dieses Gas besteht aus den Brüden (verunreinigten Dampfmengen), die aus dem Expander, der Pelletpresse und/oder dem Kühler entnommen werden.

Dadurch, daß die Brüden stark feuchtigkeitsbeladen sind, braucht dem Material weniger Wasser zugeführt werden. Dieses nimmt das Wasser vielmehr aus den Brüden auf, die den Prozessorbehälter von unten nach oben durchströmen. Dabei wird auch ein großer Teil der Geruchsstoffe, der bei den höheren Temperaturen freigesetzt ist, durch das kühle Ausgangsmaterial, das sich im Prozessorbehälter befindet, gebunden. Durch die Gegenstromkühlung bzw. Gegenstromerwärmung wird das Material, wenn es sich nach unten bewegt, immer mehr erwärmt, so daß anschließend weniger Energie zum Erwärmen zugeführt werden muß. Insgesamt resultiert also eine Energieeinsparung durch Abwärmerückgewinnung und eine Wassereinsparung dadurch, daß die Brüden zur Befeuchtung des Ausgangsmaterials verwendet werden.

Bei einer vorteilhaften Ausführungsform ist der Kühler durch ein Sauggebläse über eine Rohrleitung mit dem Gaseintritt des Prozessorbehälters verbunden. Dadurch kann Abwärme und Wasserdampf des abkühlenden Futtermittels zurückgewonnen werden. Auch die Geruchsstoffe, die im Kühler noch freigesetzt werden, werden zum großen Teil durch das neu in die Anlage eintretende Material absorbiert.

Wenn das Ausgangsende des Expanders durch ein Sauggebläse über eine Rohrleitung mit dem Gaseintritt des Prozessorbehälters verbunden ist, werden besonders große Dampfmengen zurückgeführt. Beim Expandieren, d. h. dem schlagartigen Senken des Arbeitsdrucks auf Atmosphärendruck, verdampft nämlich schlagartig das im Material enthaltende Wasser, so daß hier große Dampfmengen bei einer Temperatur von ungefähr 100°C freigesetzt werden. Es ist besonders vorteilhaft, wenn diese dann durch das Sauggebläse in den Prozessorbehälter geleitet werden.

Dabei kann auch das Ausgangsende des Expanders durch ein Sauggebläse über eine Rohrleitung mit dem Gaseintritt des Prozessorbehälters verbunden sein. Es wird dann nicht nur der heiße Dampf, der am Ausgangsende des Expanders entsteht, sondern auch der Dampf abgeleitet und wieder verwendet, der am Ausgangsende der Pelletpresse freigesetzt wird.

Durch die Rohrleitungen wird im wesentlichen Wasserdampf geleitet. Damit dieser nicht an den Wänden der Rohrleitungen kondensiert, wird zweckmäßigerweise vorgesehen, daß die Rohrleitungen isoliert und beheizt sind. Bei entsprechender Isolierung kann aber die Heizleistung sehr knapp bemessen werden.

Insgesamt zeigt sich, daß durch die erfindungsgemäße Anlage gegenüber herkömmlichen Anlagen entscheidende Einsparungen erzielt werden können. Ungefähr 50 % der Abwärme kann zurückgewonnen werden. Da im Grunde alle Energie, die in die Anlage eingegeben wird, in Wärme umgewandelt wird, bedeutet dies auch 50 % Energieersparnis und damit eine 50%ige Reduktion des CO₂-Ausstoßes von Kraftwerken mit fossilen Brennstoffen, die zur Energieerzeugung notwendig sind.

Die Emission von Gerüchen wird um ungefähr 80 % reduziert. Der Prozessorbehälter hat aber auch eine gute mechanische Filterwirkung, was 50 % Reduktion von Staubemission bedeutet. Schließlich werden erhebliche Wassermengen eingespart. Auch die Abgastemperatur ist wesentlich geringer.

Durch die Erfindung werden also folgende Vorteile erzielt. Da eine Erwärmung bereits im Prozessorbehälter erfolgt, sind kleinere Durchlaufmischer oder gar keine Durchlaufmischer mehr erforderlich. Dies bedeutet eine weitere Energieeinsparung. Es tritt keine Kondensation von Wasser im Kühler auf, da die Brüden dauernd abgesaugt werden. Im Rohrleitungssystem kann keine Kondensation auftreten, wenn die Rohre gut isoliert und ggf. beheizt sind. Die Rohrleitungsquerschnitte, mit denen Kühlluft direkt vom Kühler nach außen geleitet werden, sind geringer und es wird weniger Kühlluft benötigt, da das Futtermittel zunächst im heißeren Bereich des Kühlers mit Luft gekühlt wird, die dann abgesaugt und in den Prozessorbehälter wieder eingeführt wird. Wegen der geringeren Dampfmenge, die benötigt wird, kann ein kleinerer Dampfkessel benutzt werden. Andererseits ist es bei bestehenden Anlagen, die erweitert werden sollen, nicht notwendig, den Dampfkessel durch einen größeren zu ersetzen. Wegen der Verweilzeit des Materials im Prozessorbehälter erhält man eine bessere Konditionierung (Vorbehandlung) des Materials, was auch einen ruhigeren Lauf des Expanders und damit weniger Verschleiß bedeutet. Aufgrund der Tatsache, daß besser konditioniert wird, ist die Anlage auch weniger störungsanfällig, da die Maschinen weniger beansprucht werden. Da die mechanische Energie, die in den Expander und die Pelletpresse zum Betrieb derselben eingebracht werden in Wärme umgewandelt wird, wird sie ebenfalls zurückgewonnen.

Die Erfindung wird im folgenden anhand einer vorteilhaften Ausführungsform unter Bezugnahme auf die beigefügten Zeichnungen beispielsweise beschrieben. Es zeigen:
- Fig. 1: in einer schematischen Darstellung eine konventionelle Anlage; und

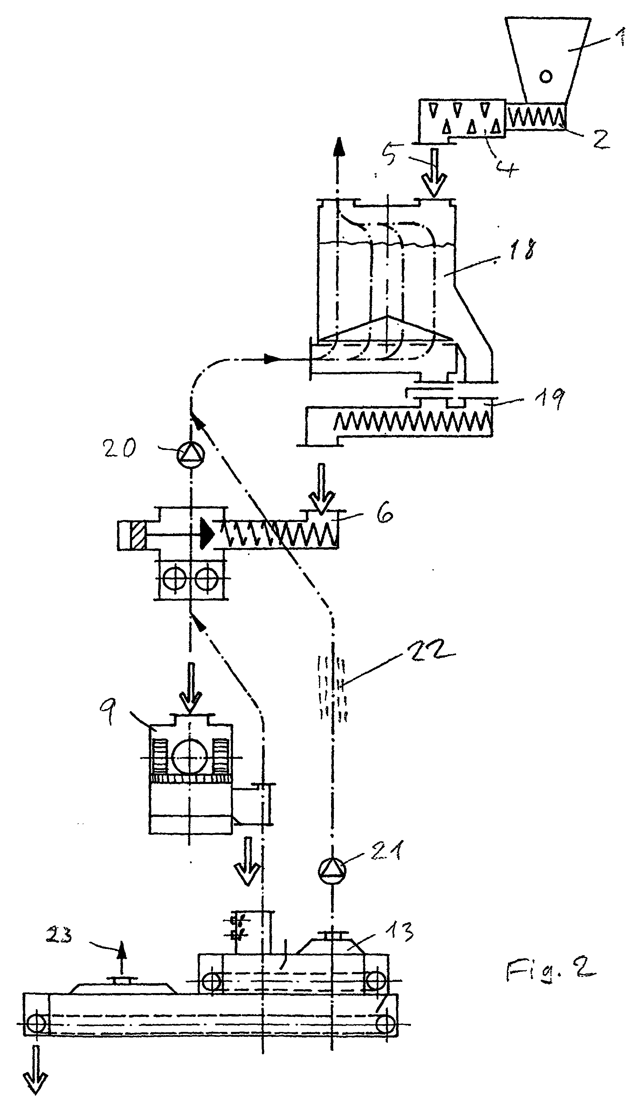

- Fig. 2: eine Anlage der Erfindung.

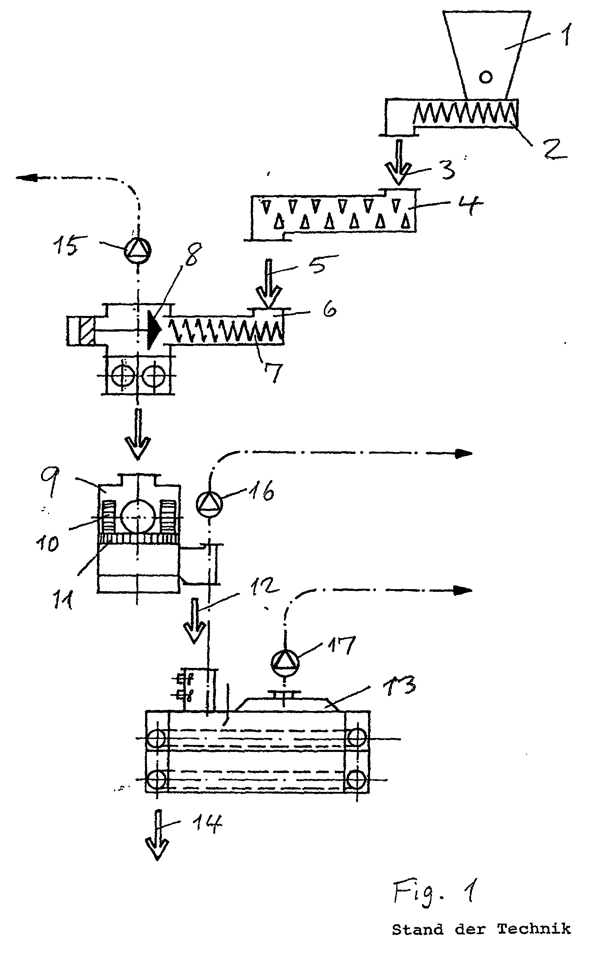

Die konventionelle Anlage der Fig. 1 weist einen Vorratsbehälter 1 für die fertige Mischung und eine Dosiereinrichtung 2 auf. In Richtung des Pfeiles 3 wird dann das Material in einen Durchlaufmischer 4 geleitet, in dem Flüssigkeiten, Dampf, Melasse, Fett usw. zugegeben werden können. Es gelangt dann in Richtung des Pfeiles 5 in den Expander 6 wo es durch ein schneckenförmiges Förderelement 7 gegen ein Gegendruckelement 8 gedrückt und dadurch auf erhöhten Arbeitsdruck gebracht wird, wobei sich durch die mechanische Bearbeitung auch die Temperatur erhöht. Auch hier kann wiederum Dampf zuzugeben werden. Wenn das Material den Expander 6 verläßt, wird es entspannt und in eine Pelletpresse 9 geleitet, wo es durch Kollerrollen 10 durch eine Matrize 11 hindurchgedrückt wird. Die so erzeugten Pellets bzw. das Granulat wird in Richtung des Pfeiles 12 in einen Kühler 13 geleitet und anschließend in Richtung des Pfeiles 14 abtransportiert. Der Expander 6 ist dabei mit einem Sauggebläse 15 versehen, um Abluft abzuführen. Am Ausgang der Pelletpresse 9 ist entsprechend ein Sauggebläse 16, am Kühler ein Sauggebläse 17 vorgesehen. Die Abluft mit ihrer Wärmeenergie und Wassergehalt wird also ungenutzt abgeleitet. Die Umwelt wird erheblich durch Gerüche belästigt, falls nicht aufwendige Filter vorgesehen sind.

Beim erfindungsgemäßen Verfahren können Dosierzelle 2 und Durchlaufmischer 4 erheblich kleiner gestaltet werden und sind bei der gezeigten Ausführungsform zusammengebaut. Dies beruht auf der zusätzlichen Konditionierung (Erwärmung und Befeuchtung) im Prozessorbehälter 18, in den das Material von oben eingefüllt und unten in der gezeigten Ausführungsform über eine Förderschnecke 19 in den Expander 6 geleitet wird. Der Ausgang des Expanders ist mit einem Sauggebläse 20 versehen, das auch die Abluft vom Ausgang der Pelletpresse 9 ansaugt und über Löcher im Boden des Prozessorbehälters 18 von unten in das Material hineindrückt. Die Abluft durchstreicht dann das Material im Behälter 18 und tritt oben aus, hat dabei aber Wärme, Wasserdampf und Gerüche zum großen Teil an das Material abgegeben. Durch ein Gebläse 21 wird schließlich noch Abluft vom Kühler 13 in den Prozessorbehälter 18 geleitet, so daß die Kühlluft der letzten Kühlerstufe, die in Richtung des Pfeiles 23 entweicht, ein wesentlich kleineres Volumen hat als bei vorbekannten Anlagen. Eine niedrigere Temperatur, einen niedrigeren Wassergehalt und eine niedrigere Geruchsbelastung hat die Abluft in diesem Bereich aufgrund der niedrigeren Temperatur des Materials in diesem Bereich des Kühlers, so daß die Umweltbelastung entsprechend gering ist.

Bei 22 ist noch eine Isolierung und Beheizung einer Rohrleitung schematisch angedeutet. Zweckmäßigerweise sind alle erwähnten Rohrleitungen für die Brüden isoliert und beheizt.

## Patentansprüche

1. Anlage zur Futtermittelherstellung mit einer Dosiereinrichtung (2), mit einem Durchlaufmischer (4), mit einem Expander (6), in dem das Material durch mechanische Bearbeitung auf hohen Druck und hohe Temperatur gebracht und anschließend entspannt wird, mit einer Pelletpresse (9) und mit einem sich daran anschließenden Kühler (13), **dadurch gekennzeichnet, daß** dem Expander (6) ein Prozessorbehälter (18) vorgeschaltet ist, in den von oben Material eingefüllt und unten abgezogen wird, wobei durch dem Boden des Behälters (18) durch Bohrungen ein Gas eintritt, das das Material von unten nach oben durchströmt, und daß als Gas Brüden verwendet werden, die dem Expander (6), der Pelletpresse (9) und/oder dem Kühler (13) entnommen werden.

2. Anlage nach Anspruch 1, **dadurch gekennzeichnet, daß** das Material bis zu einer konstant gehaltenen Höhe in den Prozessorbehälter (18) eingefüllt wird.

3. Anlage nach Anspruch 1 oder 2, **dadurch gekennzeichnet, daß** der Kühler (13) durch ein Sauggebläse (21) über eine Rohrleitung mit dem Gaseintritt des Prozessorbehälters (18) verbunden ist.

4. Anlage nach einem der Ansprüche 1 bis 3, **dadurch gekennzeichnet, daß** das Ausgangsende des Expanders (6) durch ein Sauggebläse (20) über eine Rohrleitung mit dem Gaseintritt des Prozessorbehälters (18) verbunden ist.

5. Anlage nach Anspruch 4, **dadurch gekennzeichnet, daß** das Ausgangsende des Expanders (6) über eine Rohrleitung mit dem Ausgangsende der Pelletpresse (9) verbunden ist.

6. Anlage nach einem der Ansprüche 3 bis 5, **dadurch gekennzeichnet, daß** die Rohrleitungen isoliert und beheizt sind.

## Claims

1. A plant for producing fodder comprising a dosing unit (2), a through-flow mixer (4), and an expander (6), in which the material is brought by mechanical treatment at high pressure and high temperature and is then released, a pelletting press (9) and an associated cooling unit (13), **characterized by** the expander (6) having installed before it a processor hopper (18) into which material is charged from above and discharged from below, with a gas passing through holes in the floor of the hopper and flowing upwards through the material from below, and vapour removed from the expander (6), the pelletting press (9) and/or the cooling unit (13) being used as the gas.

2. A plant according to Claim 1, **characterized by** the material being charged into the processor hopper (18) to a height that is kept constant.

3. A plant according to Claim 1 or 2, **characterized by** the cooling unit (13) being connected with the gas entrance of the processor hopper (18) by a suction fan (21) via a pipe.

4. A plant according to one of Claims 1 to 3, **characterized by** the exit end of the expander (6) being connected with the gas entrance of the processor hopper (18) by a suction fan (20) via a pipe.

5. A plant according to Claim 4, **characterized by** the exit end of the expander (6) being connected with the exit end of the pelletting press (9) via a pipe.

6. A plant according to one of Claims 3 to 5, **characterized by** the pipes being insulated and heated.

## Revendications

1. Installation de préparation d'aliments pour bétail comprenant une unité de dosage (2), un mélangeur à production continue (4), un détendeur (6), dans lequel la matière est amenée au moyen d'un traitement mécanique à une pression élevée et une température élevée et est ensuite détendue, une presse à pellets (9) et un refroidisseur (13) raccordé à celle-ci, **caractérisée en ce qu'**en amont du détendeur (6) est monté un réservoir central (18), dans lequel la matière est versée par le haut et est soutirée par le bas, sachant qu'un gaz est acheminé à travers le fond du réservoir (18) par l'intermédiaire de perçages, lequel gaz circule à travers la matière du bas vers le haut, et **en ce que** le gaz utilisé est de la vapeur chaude, qui est prélevée dans le détendeur (6), la presse à pellets (9) et/ou le refroidisseur (13).

2. Installation selon la revendication 1, **caractérisée en ce que** la matière est versée dans le réservoir central (18) jusqu'à une hauteur maintenue constante.

3. Installation selon la revendication 1 ou 2, **caractérisée en ce que** le refroidisseur (13) est relié avec le système d'admission du gaz dans le réservoir central (18) au moyen d'un ventilateur aspirant (21) par l'intermédiaire d'une conduite.

4. Installation selon une des revendications 1 à 3, **caractérisée en ce que** l'extrémité de sortie du détendeur (6) est reliée avec le système d'admission du gaz dans le réservoir central (18) au moyen d'un ventilateur aspirant (20) par l'intermédiaire d'une conduite.

5. Installation selon la revendication 4, **caractérisée en ce que** l'extrémité de sortie du détendeur (6) est reliée par l'intermédiaire d'une conduite avec l'extrémité de sortie de la presse à pellets (9).

6. Installation selon une des revendications 3 à 5, **caractérisée en ce que** les conduites sont isolées et chauffées.
